# EUROPÄISCHE PATENTSCHRIFT

(11) **EP 0 328 886 B1**
(45) Veröffentlichungstag und Bekanntmachung des Hinweises auf die Patenterteilung: **14.04.1993**
(21) Anmeldenummer: 89100805.4
(22) Anmeldetag: 18.01.1989
(51) Int. Cl.: G02B 6/12

(54) **Isoliereinrichtung zum optischen Isolieren integrierter Komponenten**
Isolator for optical isolation of integrated components
Isolateur pour l'isolation optique des composants intégrés

(30) Priorität: 19.02.1988 DE 3805278
(43) Veröffentlichungstag der Anmeldung: 23.08.1989
(73) Patentinhaber: SIEMENS AKTIENGESELLSCHAFT, 80333 München (DE)
(72) Erfinder: Matz, Richard, Dr., D-8152 Feldkirchen/Westerham (DE); Zirrgiebel, Jutta, D-8000 München 90 (DE)

(56) Entgegenhaltungen:
- DE-A- 3 627 441
- GB-A- 2 156 149
- US-A- 3 989 946
- US-A- 4 488 163
- ELECTRONICS LETTERS, Band 21, Nr. 11, 23. Mai 1985, Seiten 508, 509, Stevenage, Herts, GB; Y. KOKUBUN et al.: "Silicon optical printed circuit board for three-dimensional integrated optics"
- PATENT ABSTRACTS OF JAPAN, Band 11, Nr. 142 (P-573)(2589), 9. Mai 1987; & JP-A-61279806

## Beschreibung

Die Erfindung betrifft gemäß dem Oberbegriff des Patentanspruchs 1 eine Isoliereinrichtung zum optischen Isolieren von auf einem Substrat für die integrierte Optik integrierten Komponenten.

Für die optische Nachrichtenübertragung werden integriert optische Komponenten auf InP-Basis als kostengünstig angesehen, weil planare Technologie Mikrooptik und Mikromechanik ersetzt. Als Folge der Integration nimmt allerdings die Wechselwirkung zwischen den einzelnen Bauelementen zu, so daß es zu unerwünschtem Nebensprechen zwischen verschiedenen Übertragungskanälen kommt. Integration ist deshalb nur in dem Maße sinnvoll, wie es gelingt, Bauelementstrukturen mit hoher Nebensprechdämpfung zu realisieren.

Zur Verbesserung der elektrischen Nebensprechdämpfung können für epitaktisch gewachsene Bauelemente semiisolierende Substrate, Trenngräben und zusätzlich Abschirmelektroden verwendet werden. In der integrierten Optik sind außerdem Maßnahmen gegen optisches Nebensprechen zu treffen. Hierfür werden auf Substraten aus InP manchmal lichtabsorbierende InGaAs-Schichten eingesetzt (siehe dazu beispielsweise C. Bornholdt et al, Electron. Lett. 23, 2 (1987)). Die für völlige Absorption nötige Schichtdicke ist mit den üblichen Epitaxieverfahren nicht realisierbar. Auch einzelne Trenngräben erscheinen wenig aussichtsreich, da sich Streulicht aufgrund des hohen Brechungsindexes durch Mehrfachreflexion im Kristall gleichmäßig verteilt.

Aufgabe der Erfindung ist es, eine Isoliereinrichtung der eingangs genannten Art anzugeben, mit welcher integrierte Komponenten weitgehend von den im Substrat übertragenen optischen Störungen entkoppelt werden können.

Diese Aufgabe wird durch die im kennzeichnenden Teil des Patentanspruchs 1 angegebenen Merkmale gelöst.

Bei der erfindungsgemäßen Isoliereinrichtung kann ein an der Oberfläche des zwischen den Schlitzen liegenden Substratgebietes integriertes Element, beispielsweise eine Photodiode, von dem Streulicht im Substrat besser entkoppelt werden. Das genannte Substratgebiet wird vorzugsweise an zwei Enden monolithisch mit dem Substrat verbunden, so daß hier auch Kontakte für aktive Elemente zugeführt werden können. Streulicht kann nur über diese Enden und mit geringer Transmission auch durch die Schlitze in das Substratgebiet gelangen.

Die erfindungsgemäße Isoliereinrichtung kann vorteilhafterweise auf Substraten aus InP realisiert werden (Anspruch 2).

Zur weiteren Reduzierung der geringen Transmission durch die Schlitze ist es zweckmäßig, wenn ein Schlitz mit Metall (Anspruch 3) oder auch mit ternärem Absorbermaterial (Anspruch 4) gefüllt ist. Ein solches Auffüllen verbessert die thermische Ankopplung, und die sonst bestehende Forderung nach geringer Verlustleistung des isolierten Bauelements kann entfallen.

Die erfindungsgemäße Isoliereinrichtung läßt sich auf einfache Weise durch das im Anspruch 5 angegebene Verfahren herstellen. Ein Füllen der Schlitze mit Metall oder ternärem Absorbermaterial oder auch einem anderen Material kann nach der Herstellung erfolgen. Das Füllen durch Metall kann durch eine Metallabscheidung erfolgen.

Ein Ausführungsbeispiel der Erfindung wird anhand der Figuren in der folgenden Beschreibung näher erläutert. Von den Figuren zeigen:
- Figur 1: eine perspektivische Darstellung einer erfindungsgemäßen Isoliereinrichtung, und
- Figur 2 und Figur 3: jeweils einen senkrecht zur Längsrichtung der Schlitze geführten Schnitt durch die Einrichtung nach Figur 1, wobei die Schlitze mit Metall bzw. ternärem Absorbermaterial gefüllt sind.

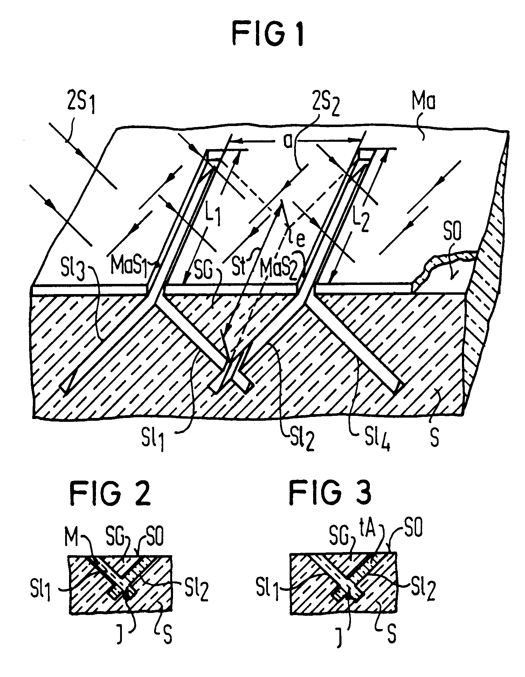

Beim Ausführungsbeispiel nach Figur 1 sind die beiden in der Substratoberfläche SO mit Abstand d nebeneinander verlaufend ausgebildeten, von dieser Oberfläche SO in Richtung aufeinanderzu in die Tiefe gehenden Schlitze Sl₁ und Sl₂ an der Substratoberfläche durch zwei streifenförmige Ausnehmungen MaS₁ und MaS₂ einer auf die Substratoberfläche SO aufgebrachten Schattenmaske Ma definiert. Die Länge der Ausnehmung MaS₁ entspricht der Länge L₁ des durch sie definierten Schlitzes Sl₁. Die Länge der Ausnehmung MaS₂ entspricht der Länge L₂ des durch sie definierten Schlitzes Sl₂.

Die beiden Schlitze Sl₁ und Sl₂ kreuzen sich im Inneren des Substrats S auf einer durch ihre Länge L₁ und L₂ bestimmten Strecke St.

Die beiden Schlitze Sl₁ und Sl₂ bilden gemeinsam die Isoliereinrichtung J, welche das zwischen den Schlitzen Sl₁ und Sl₂ liegende, im Profil dreieckförmige Substratgebiet SG auf der bestimmten Strecke St vom Substrat S trennen und an zumindest einem Ende e dieser Strecke eine monolithische Verbindung des Gebiets SG mit dem Substrat S belassen. In der Praxis wird meist an beiden Enden der Strecke St eine monolithische Verbindung des Substratgebiets SG mit dem Substrat S belassen, so daß dieses Gebiet SG eine Brücke bildet.

An der Oberfläche des vom Substrat optisch isolierten Substratgebiets SG können eine oder mehrere aktive oder passive Komponenten integriert sein oder werden, die optisch vom Substrat S entkoppelt sind.

Die Herstellung der Isoliereinrichtung J kann so erfolgen, daß die Schlitze Sl₁ und Sl₂ durch laserinduziertes, naßchemisches Ätzen mit zwei schräg in Richtung aufeinanderzu auf die Substratoberfläche SO gerichteten Lichtstrahlen LS₁ und LS₂ erzeugt werden, wobei die Ausnehmungen MaS₁ und MaS₂ dafür sorgen, daß die Lichtstrahlen nur in diesen Ausnehmungen auf die Substratoberfläche SO auftreffen. Die Lichtstrahlen LS₁ und LS₂ sollten zumindest nahezu parallel sein. Mit Hilfe dieser Lichtstrahlen LS₁ und LS₂ wird solange in die Tiefe des Substrats S geätzt, bis die entstehenden Schlitze Sl₁ und Sl₂ im Inneren des Substrats S ineinandermünden oder sich kreuzen.

Beim Beispiel nach Figur 1 trifft jeder Lichtstrahl LS₁ bzw. LS₂ beide Ausnehmungen MaS₁ und MaS₂, so daß neben den Schlitzen Sl₁ und Sl₂ zwei zusätzliche Schlitze Sl₃ und Sl₄ entstehen, die von der Substratoberfläche SO schräg in Richtung voneinander fort in die Tiefe gehen.

Das laserinduzierte, naßchemische Ätzen ist beispielsweise aus Appl. Phys. Lett. 47 (3), Aug. 1985, S. 269-271 bekannt und braucht deshalb hier nicht näher beschrieben werden.

Bei einem Ausführungsbeispiel wurden zwei im Abstand von 200 µm nebeneinanderliegende Substratgebiete SG in n-dotiertem InP-Substrat-(100)-Oberfläche erzeugt. Die Schlitze Sl₁ und Sl₂ wurden durch laserinduziertes, naßchemisches Ätzen mit zwei aufgeweiteten, symmetrisch unter 45° auf die Substratoberfläche SO einfallenden und in sich nahezu parallelen Lichtstrahlen geätzt. Die Lichtwellenlänge und die Lichtintensität betrugen 488 nm bzw. 180 mW/cm² je Strahl. Als Schattenmaske Ma diente ein aufgedampfter Titanfilm, in dem durch Lift-Off Paare von 3 bis 8 µm breiten Ausnehmungen MaS₁ und MaS₂ geöffnet waren. Der Abstand d der Ausnehmungen MaS₁ und MaS₂ betrug 50 µm. Durch lokales Überdampfen mit Chrom wurden die Ausnehmungen MaS₁ und MaS₂ und damit auch die Substratgebiete SG auf eine Länge L₁ und L₂ von 1000 µm begrenzt. Die erforderliche Tiefe der Schlitze Sl₁ und Sl₂ von 35 bis 40 µm wurde in HCl : HNO₃ : H₂O = 1 : 1 : 20 als Ätzlösung bei 0,7 Volt anodischem Probenpotential, bezogen auf eine Kalomelelektrode, in 30 Minuten erreicht.

Für die Isolation realer Bauelemente kann eine ohnehin vorhandene Kontaktmetallisierung als Schattenmaske Ma dienen. Da p-dotiertes Material im Gegensatz zu n-dotiertem Material in der Ätzlösung von sichtbarem Licht nicht angegriffen wird, können auch p-dotierte Epitaxieschichten als Schattenmaske Ma für das Verfahren dienen.

Ein eventuelles Auffüllen der Schlitze Sl₁ und Sl₂ mit Metall oder mit ternärem Absorbermaterial kann nach ihrer Herstellung erfolgen.

## Patentansprüche

1. Isoliereinrichtung (J) zum optischen Isolieren von auf einem Substrat (S) angebrachten optischen Komponenten für die integrierte Optik,
**dadurch gekennzeichnet,**
daß die Isoliereinrichtung (J) aus wenigstens zwei in der Substratoberfläche (SO) mit Abstand (d) nebeneinander verlaufend ausgebildeten, von dieser Oberfläche (SO) schräg in Richtung aufeinanderzu in die Tiefe gehenden und im Inneren des Substrats (S) auf einer bestimmten Strecke (St) ineinandermündenden Schlitzen (Sl₁, Sl₂) mit Längen L₁ und L₂ besteht, wobei die Schlitze (SL₁, SL₂) ein zwischen ihnen liegendes Substratgebiet (SG) auf der bestimmten Strecke (St) vom Substrat (S) trennen und an zumindest einem Ende (e) dieser Strecke (St) eine monolithische Verbindung des Gebiets (SG) mit dem Substrat (S) besteht.

2. Einrichtung nach Anspruch 1, **dadurch gekennzeichnet,** daß das Substrat (S) aus InP besteht.

3. Einrichtung nach Anspruch 1 oder 2, **dadurch gekennzeichnet,** daß ein Schlitz (Sl₁, Sl₂) mit einem Metall (M) gefüllt ist.

4. Einrichtung nach einem der vorhergehenden Ansprüche, **dadurch gekennzeichnet,** daß ein Schlitz (Sl₁, Sl₂) mit einem ternären Absorbermaterial (tA) gefüllt ist.

5. Verfahren zur Herstellung einer Einrichtung nach einem der vorhergehenden Ansprüche,
**dadurch gekennzeichnet,**
daß die Schlitze (Sl₁, Sl₂) durch laserinduziertes, naßchemisches Ätzen mit zwei schräg in Richtung aufeinanderzu auf die Substratoberfläche (SO) gerichteten und nur in mit Abstand nebeneinander verlaufenden, die Schlitze (Sl₁, Sl₂) in der Substratoberfläche (SO) definierenden, streifenförmigen Bereichen (MaS₁, MaS₂) auf die Substratoberfläche (SO) auftreffenden Lichtstrahlen (LS₁, LS₂) erzeugt werden, wobei solange in die Tiefe geätzt wird, bis die entstehenden Schlitze (Sl₁, Sl₂) im Inneren des Substrats (S) ineinandermünden oder sich schneiden.

## Claims

1. Isolation means (J) for optical isolation of optical components situated on a substrate (S) for integrated optics, characterised in that the isolation means (J) comprises at least two slots (Sl₁, Sl₂) with lengths L₁ and L₂ which are formed in the substrate surface (SO) so as to extend next to one another at a distance (d), which proceed downwards from said surface (SO) obliquely in a direction towards one another, and which merge with one another in the interior of the substrate (S) on a particular path (St), in which the slots (Sl₁, Sl₂) separate a substrate region (SG) lying between them on the particular path (St) from the substrate (S), and a monolithic connection of the region (SG) to the substrate (S) exists at at least one end (e) of said path (St).

2. Means according to Claim 1, characterised in that the substrate (S) comprises InP.

3. Means according to Claim 1 or 2, characterised in that one slot (Sl₁, Sl₂) is filled with a metal (M).

4. Means according to one of the preceding claims, characterised in that one slot (Sl₁, Sl₂) is filled with a ternary absorber material (tA).

5. Method for manufacturing a means according to one of the preceding claims, characterised in that the slots (Sl₁, Sl₂) are generated by laser-induced, wet-chemical etching with two light beams (LS₁, LS₂) which are directed obliquely in the direction towards one another onto the substrate surface (SO) and which strike the substrate surface (SO) only in strip-shaped regions (MaS₁, MaS₂) that define the slots (Sl₁, Sl₂) in the substrate surface (SO) and extend next to one another at a distance, in which etching is performed until a depth is reached at which the resulting slots (Sl₁, Sl₂) merge with one another or intersect in the interior of the substrate (S).

## Revendications

1. Dispositif d'isolation (J) pour réaliser l'isolation optique de composants optiques, qui sont disposés sur un substrat (S), pour l'optique intégrée, caractérisé par le fait
que le dispositif d'isolation (J) est constitué par au moins deux fentes (Sl₁, Sl₂) possédant des longueurs (L₁ et L₂), qui sont formées l'une à côté de l'autre en étant séparées par la distance (d), dans la surface (SO) du substrat et s'étendent en profondeur obliquement l'une vers l'autre à partir de cette surface (SO) et se rejoignent à l'intérieur du substrat (S) sur une section déterminée (St), et que les fentes (Sl₁,Sl₂) séparent du substrat (S) une région (SG) du substrat, située entre ces fentes, sur la section déterminée (St), et qu'une liaison monolithique entre la région (SG) et le substrat (S) existe au niveau d'au moins une extrémité (e) de cette section (St).

2. Dispositif suivant la revendication 1, caractérisé par le fait que le substrat (S) est formé de InP.

3. Dispositif suivant la revendication 1 ou 2, caractérisé par le fait qu'une fente (Sl₁, Sl₂) est remplie par un métal (M).

4. Dispositif suivant l'une des revendications précédentes, caractérisé par le fait qu'une fente (Sl₁, Sl₂) est remplie par un métal absorbant ternaire (tA).

5. Procédé pour fabriquer un dispositif suivant l'une des revendications précédentes,
caractérisé par le fait
qu'on forme les fentes (Sl₁,Sl₂) au moyen d'une corrosion par voie chimique humide, induite par laser, au moyen de deux faisceaux de lumière (LS₁,LS₂), qui sont dirigés obliquement l'un vers l'autre sur la surface (SO) du substrat et rencontrent la surface (SO) du substrat uniquement dans des zones en forme de bandes (MaS₁, MaS₂), qui s'étendent côte-à-côte à distance l'une de l'autre et définissent les fentes (Sl₁, Sl₂) dans la surface (SO) du substrat, la corrosion étant exécutée en profondeur jusqu'à ce que les fentes obtenues (Sl₁, Sl₂) se rencontrent ou se recoupent à l'intérieur du substrat (S).
